# EUROPEAN PATENT APPLICATION

(11) **EP 0 869 317 A1**
(43) Date of publication of application: **07.10.1998**
(21) Application number: 97400742.9
(22) Date of filing: 01.04.1997
(51) Int. Cl.: F23L 7/00

(54) **Apparatus and method for improving performance of gas burner reactors**

(71) Applicant: Ionic Fuel Technology, Inc., Wilmington, Delaware 19801 (US)
(72) Inventor: Fordham, Jeffrey, Fawkham, Near Dartford, Kent DA3 8NA (GB)
(74) Representative: Dubois-Chabert, Guy

(57) **Abstract**

An ion vapor generator device for producing a quantity of charged ions comprises a pressure-resistant container (12) for holding a quantity of liquid (20) including water, and vibrating means (16) for imparting controlled movement to the surface (21) of the liquid so as to release ion vapors within said container above said liquid surface. Outlet means (24) are provided for with drawing at least a portion of an ion-enriched vapor-containing overhead stream (40) from said container. The device also includes means (38) for combining said overhead stream with a stream of pressurized gas (36). The pressurized gas stream containing ion vapors (50) may be passed to the reaction and/or combustion side of a chemical process system (52), or injected into a pressurized combustion system.

## Description

### Background of the Invention

### Field of the Invention

The present invention relates generally to apparatus and method for enhancing the performance of combustion and fluid, i.e. gas or liquid burners and reactors. The invention has particular utility in connection with a method and apparatus for reducing the production of coke deposit and/or to accelerate the remove of coke deposits formed in high temperature gas burned reactors, and will be described in connection with such utilities, although other utilities are contemplated.

### Brief Description of the Prior Art

Combustion of a fluid i.e a gas or liquid takes place in two ways, depending on when the fluid and air are mixed. When a fluid and air are mixed before ignition, such as in a conventional burner, burning proceeds by hydroxylation. The hydrocarbons and oxygen form hydroxylated carbons which become aldehydes; the addition of heat and additional oxygen then breaks down the aldehydes into H₂, CO₂ and H₂O.

"Cracking" occurs when oxygen is added to hydrocarbons after they have been heated, decomposing the hydrocarbons into carbon and hydrogen which, when combined with sufficient oxygen form CO₂ and H₂O. Soot and carbon black are formed if insufficient oxygen is present or if the combustion process is arrested before completion.

The presence of measureable amounts of water vapor is known to have the catalytic effect of improving the efficiency of various combustion processes, as is described in Van Nostrand's Scientific Encyclopedia, 4^{th} Edition FE, page 1501. For many years, and particularly in the last 25 years, bubbling and other types of vapor generators have been used effectively to improve the performance of internal combustion engines. Examples of ion vapor generators usable to enhance fossil fuel combustion efficiency are shown in U.S. Patent Nos. 3,862,189, 4,016,837, 4,410,467, 4,952,340, 5,211,890 and 5,255,514. Additionally, a research report of prior ion vapor technology is given in Nelson, K.L. et al, "Augmentation of Gas-Phase Combustion by Bubbling Combustion Air Through Air," Proceedings of Alternate Engergy Sources IV; Hydrocarbon Technology Environment (Ann Arbor, Mich. Vol 6, 1982, pp. 273-289.

All of the foregoing prior art describe the addition of ion vapors into combustion environments under relatively low pressure conditions, i.e. for addition to a conventional internal combustion engine or a conventional combustion apparatus.

Chemical process systems such as steam crackers operate at somewhat elevated pressures. Generation of ion vapors and delivery of ion vapors under elevated pressures is difficult since the higher presses tend to flatten the water surface of a conventional ion vapor generator, thus reducing the rate of release of ion vapors. Also, higher pressures tend to carry over greater quantities of water vapor which can build up in the delivery pipes and result in substantial loss of ion vapor values.

### Summary of the Invention

The present invention provides an improved ion vapor generator for producing a quantity of electrically charged negative ions for use at elevated pressure. In summary, the improvement of the present invention comprises provision of an airtight pressure resistant container for holding a quantity of liquid including water, means for agitating or disturbing the surface of the liquid, so as to promote release of ion-containing vapors from the surface of the liquid, means flowing a gas, under pressure, over the surface of the liquid for capturing ion vapors released from the liquid, and means for withdrawing a gas stream under pressure containing ion vapors from the container, the means for withdrawing including means to separate liquid condensate from the gas stream. In a preferred embodiment of the invention, the ion vapor-containing gas stream is delivered to a chemical process facility which may include a combustion chamber and/or a reaction chamber for enhancing the combustion or reaction. In a particularly preferred embodiment of the invention, the ion vapor-containing gas stream is fed to both the combustion and heat exchanger sides of a cracker.

Advantageously, the subject invention permits ion vapors to be supplied to a combustion or reaction environment, under pressure, and in a manner such that the combustion-improving a catalytic effect of the ion vapors is not degraded due to high pressure environments. Thus, according to the subject invention, the catalytic effect of ion vapors may be used to enhance the performance of pressurized combustion systems including chemical process installation, such as a cracker or the like, a furnace, or an internal combustion engine including a turbocharged or supercharged gas engine, a diesel, etc.

For further understanding of the present invention, reference should be had to the following Detailed Description taken in conjunction with the accompanying drawings wherein like numerals depict like parts, and in which:

### Brief Description of the Drawings

Fig. 1 is a diagrammatic view of a chemical process system incorporating a pressurized ion vapor generator in accordance with the present invention; and
Fig. 2 is a diagrammatic view of a pressurized internal combustion system incorporating a pressurized ion vapor generator in accordance with the present invention.

### Detailed Description of the Preferred Embodiments

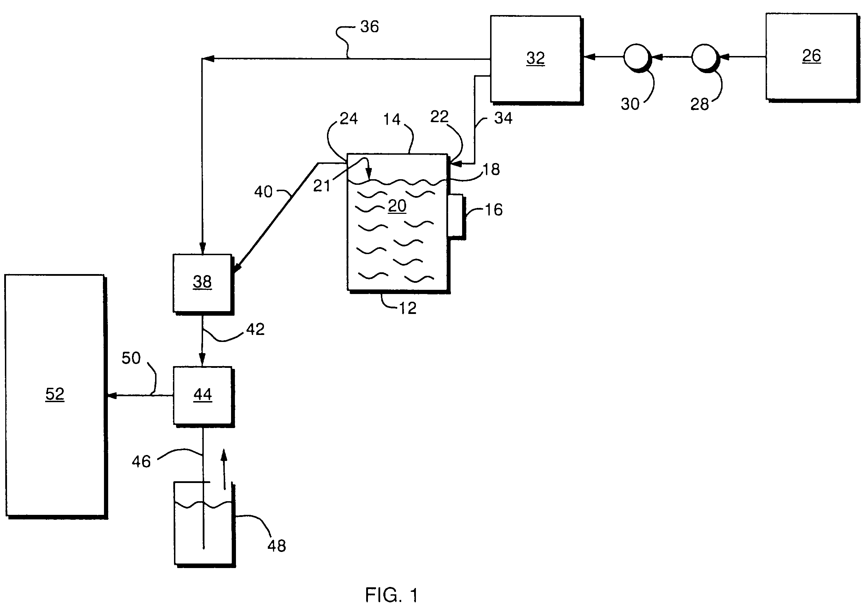

Fig. 1 shows one embodiment of an improved ion vapor generator system made in accordance with the present invention, and employed with a chemical cracking system. Such a improved generator 10 comprises a liquid-tight, pressure-resistant container 12, preferably having a detachable lid 14, or otherwise removable top. Preferably container 12 and lid 14 are made of metal such as steel, preferably lined with plastic or glass; however, other substances, as reinforced plastics, may be used.

Vibration means 16 are coupled to a side wall 18 of container 12. Vibrator 16 may comprise an electrically or pneumatically driven vibrator unit. A pneumatically driven vibrator is preferred. The vibratory levels, frequency and amplitude must be adjusted so as substantially to maintain surface tension of the liquid 20 in container 12, preferably without significantly breaking the surface, i.e. in accordance with the teachings of U.S. Patent 4,952,340 which is incorporated herein by reference. The agitation causes ions to be released from the surface 21 on liquid 20.

An inlet conduit 22 and outlet conduit 24 are connected through the container walls adjacent the top edges thereof, for permitting introduction and removal of pressurized air from the interior of container 12 above the level of liquid 20.

Pressurized air is supplied to inlet conduit 22 from a source 26. A pressure gauge 28 air flow gage 30 permit adjustment of the pressure and flow to one-way "Y" 32 which splits the pressurized air from source 26 into two streams 34 and 36. Stream 34 is connected to inlet 22, while stream 36 is directed to a one-way "Y" 38 where the stream recombined with overhead removed from the ion vapor generator 10 via conduit 40.

The combined streams are then passed by way of conduit 42 to a trap 44 wherein any liquid condensate which may form is separated and removed from the pressurized air stream, and withdrawn via conduit 46 and vent 48. In order to facilitate separation of liquid condensate from the air stream side of generator 10, trap 44 should be located physically (vertically) below outlet 24. In a preferred embodiment of the invention all of the conduits leading from the ion vapor generator are sloped downwardly to trap 44 to encourage separation of any liquid condensate therein.

The pressurized air stream containing ion vapors is then passed via conduit 50 to a pyrolizer 52 where it is combined with feedstock to the pyrolizer. Alternatively, conduit 50 may be split so as to feed a portion of the ion vapour containing pressurized air to the feedstock of the pyrolizer, while feeding another portion of the ion vapor containing pressurized air to the combustion side of the pyrolizer.

Introduction of ion vapor to the reaction and/or combustion sides of a chemical process system results in enhanced combustion efficiency and reduced emissions on the combustion side of the pyrolizer, and reduced coke buildup on the reaction side of the pyrolizer.

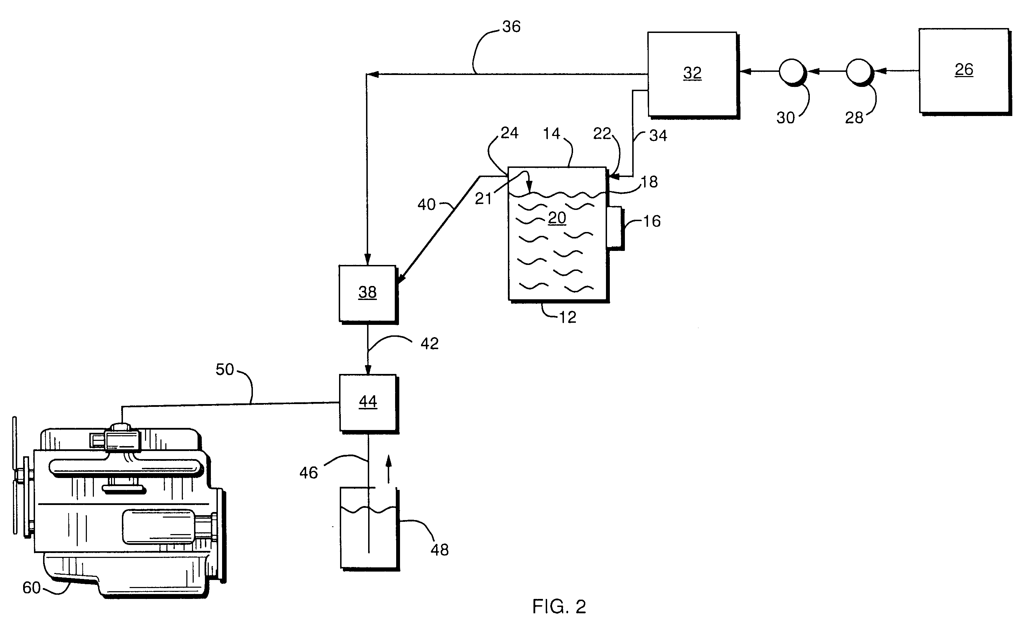

The invention is susceptible to modification. For example, as shown in Fig. 2, ion vapor containing pressurized air may be mixed with and injected into a pressurized combustion system such as a diesel, or turbocharged or supercharged internal combustion engine 60. Injection of ion vapor containing pressurized air has been found to improve combustion efficiency by a minimum of 2-3%, as well as result in cleaner burning and reduced emissions.

The invention is susceptible to modification. For example, a pressurized air stream containing ion vapors advantageously can be employed to enhance a decoking operation, i.e. by mixing the ion-vapor containing air stream with heated air, e.g. heated to about 800°C and passing the mixture in contact with a heat exchanger. Addition of ion vapor containing air to a decoking operation is found to reduce the time to remove coke from a typical installation by about 50%.

Other changes may be made in accordance with the foregoing invention without departing from the spirit and scope thereof.

## Claims

1. In an ion vapor generator device for producing a quantity of charged ions, comprising a container 12 for holding a quantity of liquid 20 including water, and vibrating means 16 for imparting controlled movement to the surface 21 of the liquid so as to release ion vapors within said container above said liquid surface, outlet means for withdrawing at least a portion of an ion-enriched vapor-containing overhad stream from said container; the improvement wherein said container comprises a pressure-resistant container, and said device includes means 38 for combinging said overhead stream with a stream of pressurized gas.

2. An improved device according to claim 1, and including means 44 downstream of such means for combining for removing condensate from said combined streams.

3. An unproved device according to claim 1, and further comprising means 50 for introducing said combined streams into a chemical reactor 52.

4. An improved device according to claim 1, and further comprising means 50 for introducing said combined gas into a combustion device 60.

5. An improved device according to claim 1, wherein said vibrating means 16 comprises a pneumatically driven vibrator.

6. An improved device according to claim 1, and including means 44 for separating and removing liquid condensate from the overhead stream.

7. an improved device according to claim 6, wherein the separating and removing means 44 is located vertically below the outlet means 24.

8. An improved device according to claim 3, wherein said factor 52 comprises a pyrolizer.

9. A method of reducing coke formation in a chemical reactor, an improvement which comprises supplying a pressurized gas stream containing ion vapors to the reaction side of the reactor.

10. A method according to claim 9, wherein said gas is pressurized to enable flow of such pressurized gas stream through the reactor.

11. A method of reducing coke formation in a chemical reactor, an improvement which comprises supplying a pressurized gas stream containing ion vapors to the combustion side of reactor.

12. A method according to claim 8, wherein said gas is pressurized to enable flow of such pressurized gas stream to combustion.
